# EUROPEAN PATENT SPECIFICATION

(11) **EP 4 481 708 B1**
(45) Date of publication and mention of the grant of the patent: **25.11.2026**
(21) Application number: 22963188.2
(22) Date of filing: 28.10.2022
(51) Int. Cl.: B60W 40/09, G08G 1/00, G06Q 10/00, G06N 3/02, B60W 40/08

(54) **METHOD FOR EVALUATION OF AUTOMOBILE SAFETY DRIVING EVENTS, EQUIPMENT, AND STORAGE MEDIUM**
VERFAHREN ZUR BEWERTUNG VON AUTOMOBILSICHERHEITS-FAHREREIGNISSEN, AUSRÜSTUNG, UND SÜEICHERMEDIUM
PROCÉDÉ D'ÉVALUATION D'ÉVÉNEMENTS DE CONDUITE EN SÉCURITÉ AUTOMOBILE, ÉQUIPEMENT, ET MOYEN DE STOCKAGE

(43) Date of publication of application: 25.12.2024
(73) Proprietor: Streamax Technology Co., Ltd., Shenzhen, Guangdong 518000 (CN)
(72) Inventor: WANG, Yuling, Shenzhen, Guangdong 518000 (CN); HAN, Yonggang, Shenzhen, Guangdong 518000 (CN); GU, Zixian, Shenzhen, Guangdong 518000 (CN); ZHOU, Xiaocong, Shenzhen, Guangdong 518000 (CN)
(74) Representative: Canzler & Bergmeier Patentanwälte Partnerschaft mbB
(86) International application number: PCT/CN2022/128382
(87) International publication number: WO 2024/087207

(56) References cited:
- EP-A1- 3 266 668
- EP-A1- 3 495 223
- EP-A1- 3 722 908
- EP-A2- 3 533 681
- CN-A- 109 840 612
- CN-A- 111 047 047
- CN-A- 113 570 747
- US-A1- 2021 370 955
- US-A1- 2022 126 818

## Description

### TECHNICAL FIELD

The present invention relates to the field of vehicle driving technology, and in particular to a method for evaluation of automobile safety driving events, a piece of equipment and a storage medium.

### BACKGROUND

In the field of driving safety, vehicles are generally equipped with DMS (Driver Monitor System) cameras facing the driver's face and ADAS (Advanced Driving Assistance System) cameras facing the driving direction to monitor the road surface. The driver's status and driving behavior, as well as the situation of the vehicle's surrounding environment are monitored through images collected by DMS cameras and ADAS cameras, and an alarm is generated to remind the driver when risks are detected.

After the alarm occurs, it is extremely important to review and track the dangerous driving behavior during driving. Through review and tracking, it is enabled to understand the driver's behavioral habits, clarify the driver's driving rules, and grasp the driver's safe driving status during driving, and then conduct a personalized intervention, a refined training, a quantitative assessment, etc.

Currently, when reviewing and tracking risky behaviors during driving, the evaluation is usually performed based on the number of alarm events, and the credibility of the evaluation of the driver's safe driving is not high, which is not conducive to improving the timeliness of driver intervention, the refinement of training, and the effectiveness of assessment.

US 2022/126818 A1 provides a method for identifying high-risk driving situations in driving data which includes receiving driving data, identifying trigger events in the driving data, and using the trigger events in combination with first portions of the driving data corresponding to periods of time preceding the trigger events, training a machine learning model to identify features, in the driving data, associated with the trigger events. The method further includes detecting a high risk driving situation in real time driving data by using the machine learning model to identify the features associated with the trigger events, and performing a defensive driving maneuver in response to the detection of the high risk driving situation.

### TECHNICAL PROBLEM

In view of this, embodiments of the present application provide methods, equipment and storage media to solve the problems of untimely driver intervention, inaccurate training and invalid assessment caused by evaluating according to the number of alarm events when reviewing and tracking events in the existing technologies, so as to enhance the credibility of driver safety driving assessments.

### TECHNICAL SOLUTIONS

In accordance with a first aspect of the invention, a method for evaluation of automobile safety driving events, implemented by evaluation equipment, is provided, the method includes steps of:
obtaining, by sensors of a vehicle, an event's static environmental characteristic, dynamic environmental characteristic, vehicle kinetic energy characteristic during the event, and degree characteristic of the event itself; and
inputting the static environmental characteristic, the dynamic environmental characteristic, the vehicle kinetic energy characteristic, and the degree characteristic of the event itself into a fully-connected neural network that has been trained in advance, and calculating an evaluation result of the event by means of the fully-connected neural network.

The event degree characteristic of the event itself includes a duration of the event, a duration of driving when the event occurs, a frequency of occurrence of the event, and an attribute value of the event.

The determining the evaluation result of the event by means of the fully-connected neural network includes: calculating the static environmental characteristic and dynamic environmental characteristic through a first fully-connected layer to obtain an environmental characteristic value; calculating the vehicle kinetic energy characteristic through a second fully-connected layer to obtain a vehicle kinetic energy characteristic value of the event; calculating the event degree characteristic through a third fully-connected layer to obtain an event degree characteristic value; and calculating the environmental characteristic value, the vehicle kinetic energy characteristic value and the event degree characteristic value through a fourth fully-connected layer to obtain the evaluation result of the event.

In combination with the first aspect, in a first possible implementation of the first aspect, the degree characteristic of the event itself includes one or more of the following: a degree characteristic of sharp acceleration, a degree characteristic of sharp deceleration, a degree characteristic of sharp turning, a degree characteristic of acceleration, a degree characteristic of deceleration, a degree characteristic of turning, a degree characteristic of vibration, a degree characteristic of speeding, a degree characteristic of low speed, a degree characteristic of relative collision, a degree characteristic of pedestrian collision, a degree characteristic of lane keeping, a degree characteristic of eye closing, a degree characteristic of yawning, a degree characteristic of head lowering, a degree characteristic of left-and-right observation, a degree characteristic of down glancing, a degree characteristic of talking on or playing with a mobile phone, a degree characteristic of smoking, a degree characteristic of eating and drinking, a degree characteristic of unfastened seat belt, a degree characteristic of one-hand off handlebar, a degree characteristic of both-hands off handlebar, and a degree characteristic of facial expression.

In combination with the second possible implementation of the first aspect, in a third possible implementation of the first aspect, the degree characteristic of sharp turning also includes a lateral direction angle during a sharp turning.

The degree characteristic of vibration also includes an average interval duration of a vibration event.

The degree characteristic of speeding also includes a speed limit value.

The degree characteristic of relative collision also includes a time distribution characteristic of relative collision occurrence times.

The degree characteristic of pedestrian collision also includes a time distribution characteristic of pedestrian collision occurrence times.

The degree characteristic of lane keeping also includes a type of lane line.

The degree characteristic of yawning also includes a distribution characteristic of mouth length-to-width ratios.

The degree characteristic of head-lowering also includes an angle distribution characteristic of head lowering.

The degree characteristic of left-and-right observation also includes a distribution characteristic of head deflection angles.

In combination with the first aspect, in a fourth possible implementation of the first aspect, the vehicle kinetic energy characteristic during the event includes a vehicle state at a beginning of the event, a vehicle state at an end of the event, and a distribution characteristic of vehicle states in a duration of the event.

In combination with a fourth possible implementation of the first aspect, in a fifth possible implementation of the first aspect, the vehicle state includes one or more of a speed of a vehicle, a longitudinal acceleration of the vehicle, a lateral acceleration of the vehicle, an acceleration in a vertical direction of the vehicle, and a relative position of the vehicle to a lane line in the duration of the event.

In combination with the first aspect, in a sixth possible implementation of the first aspect, the static environmental characteristic includes one or more of a characteristic of road location element, a characteristic of road type, a characteristic of temperature and a characteristic of weather, and the dynamic environmental characteristic includes one or two of a quantity characteristic of traffic flow and a front-to-vehicle distance characteristic of a current lane.

In combination with the sixth possible implementation of the first aspect, in a seventh possible implementation of the first aspect, the quantity characteristic of the traffic flow includes a quantity of the traffic flow at a beginning of the event, a quantity of the traffic flow at an end of the event and a distribution characteristic of quantities of the traffic flow in a duration of the event.

The front-to-vehicle distance characteristic of the current lane includes a front-to-vehicle distance of the current lane at the beginning of the event, a front-to-vehicle distance of the current lane at the end of the event and a distribution characteristic of front-to-vehicle distance of the current lane in the duration of the event.

In accordance with a second aspect of the embodiments of the present application, a piece of equipment for evaluation of automobile safety driving events is provided, including a memory, a processor, and a computer program stored in the memory and executable by the processor, where the processor, when executing the computer program, is configured to implement steps of the method described in any one of the first aspects.

In accordance with a third aspect of the embodiments of the present application, a computer-readable storage medium is provided, and in the computer-readable storage medium, a computer program is stored. The computer program, when executed by a processor, causes steps of the method described in any one of the first aspects to be implemented.

### BENEFICAL EFFECTS

Compared with the existing technologies, embodiments of the present application have at least the following beneficial effects: when a safety driving event occurs in an automobile, the embodiment of the present application obtains the event's static environmental characteristic, dynamic environmental characteristic, vehicle kinetic energy characteristic during the event, and the degree characteristic of the event itself, and inputs the obtained static environmental characteristic, dynamic environmental characteristic, vehicle kinetic energy characteristic and degree characteristic of the event itself into a fully-connected neural network for calculation to obtain an evaluation result of the event. In the present application, since the event is evaluated based on the static environmental characteristic and dynamic environmental characteristic in view of the vehicle kinetic energy characteristic during the event as well as the degree characteristic of the event itself, the event can be comprehensively and accurately evaluated by means of spatial and temporal characteristics and kinetic energy degree characteristic of the event, which is conducive to improving the precise grasp of driving behaviors of a driver and improving the accuracy of the graded and classified assessment and targeted training of the driver.

### BRIEF DESCRIPTION OF DRAWINGS

In order to illustrate the technical solutions in the embodiments of the present application more clearly, the drawings needed to be used in the description of the embodiments will be briefly introduced below. Obviously, the drawings in the following description are merely some embodiments of the present application. For those of ordinary skill in the art, other drawings may be obtained based on these drawings without exerting creative efforts.
FIG. 1 is a schematic diagram of an implementation process of a method for evaluation of automobile safety driving events provided in an embodiment of the present invention;
FIG. 2 is a schematic diagram of a structure of a fully-connected neural network for evaluating an event's characteristics provided in an embodiment of the present invention;
FIG. 3 is a schematic diagram of a device for evaluation of automobile safety driving events provided in an embodiment of the present invention; and
FIG. 4 is a schematic diagram of a piece of equipment for evaluation of automobile safety driving events provided in an embodiment of the present invention.

### DETAILED DESCRIPTION OF EMBODIMENTS

In the following description, for the purpose of explanation rather than limitation, specific details such as specific system structures and technologies are presented to provide a thorough understanding of the embodiments of the present invention.

However, it should be clear to those skilled in the art that the present invention. may also be implemented in other embodiments without these specific details. In other cases, detailed descriptions of well-known systems, devices, circuits and methods are omitted to avoid unnecessary details hindering the description of the present invention.

In order to illustrate the technical solution described in the present invention, the following is illustrated through specific embodiments.

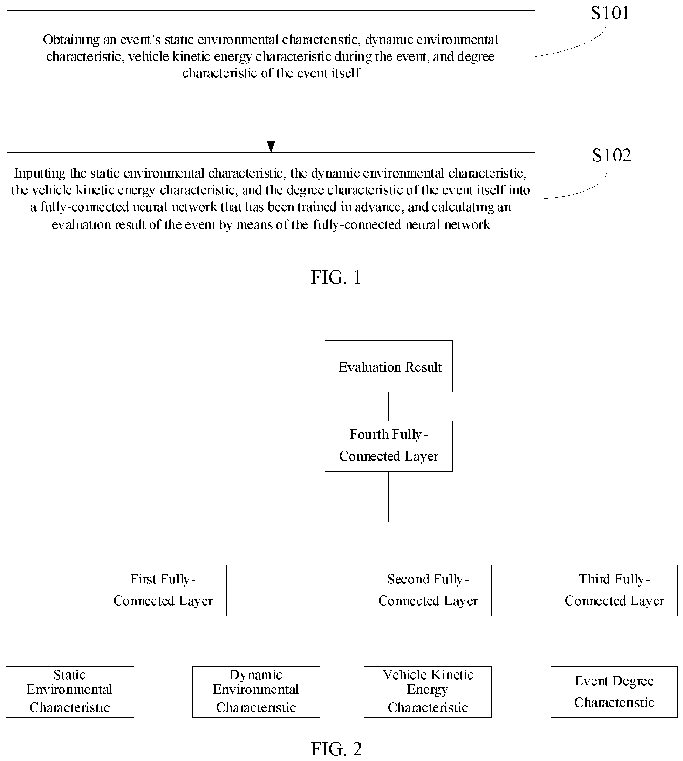

FIG. 1 is a schematic diagram of an implementation flow of a method for evaluation of automobile safety driving events provided in an embodiment of the present application, which is described in detail as follows:
In step S101, an event's static environmental characteristic, dynamic environmental characteristic, vehicle kinetic energy characteristic and degree characteristic of the event itself are obtained.

Herein, in the embodiments of the present application, characteristic information including the static environmental characteristic, the dynamic environmental characteristic, the vehicle kinetic energy characteristic and the degree characteristic of the event itself may be obtained from on-board unit (including DMS camera and/or ADAS camera, etc.), or may also be directly obtained from sensors that collect relevant information, for example, directly obtained from image sensors and motion sensors.

Herein, the vehicle's motion information such as sharp acceleration, sharp deceleration, sharp turning, vibration, etc., may be obtained from the vehicle's motion sensor through the on-board units, for example, a gyroscope.

The vehicle's direction information may be obtained through calculation based on the real-time positioning coordinate information, and the vehicle's acceleration, deceleration, turning, over-speed, low speed, and other motion information may be calculated.

The driver's action or status information, including such action or status information as closing eyes, yawning, looking down, lowering head, making phone calls or playing with mobile phones, smoking, eating or drinking, not wearing a seat belt, leaving the handlebars with one hand, leaving the handlebars with both hands, and facial expressions, etc., may be directly or indirectly collected through the vehicle's DMS camera.

The status information of the vehicle collision, the collision with pedestrians, the distance between the vehicle and the vehicle in front, and the position information of the vehicle relative to the lane line may be directly or indirectly collected through the vehicle's ADAS camera.

Information such as weather, temperature, and location may also be obtained through the network, maps or other sensing devices.

Based on the above information, the static environmental characteristic, the dynamic environmental characteristic, the vehicle kinetic energy characteristic, and the degree characteristic of the event itself may be obtained when the event of vehicle occurs.

Herein, the static environmental characteristic is used to describe the static environmental characteristic of a location where the event occurs, that is, the characteristic that is unrelated to the vehicle and the driver. The static environmental characteristic may be expressed as: ${M}_{1} = \left[\begin{matrix}{e}_{1} \\ {e}_{2} \\ {e}_{3} \\ {e}_{4}\end{matrix}\right]$

The static environmental characteristic includes a location element characteristic e₁ of the location where the event occurs, a road type characteristic e₂ of the location where the event occurs, a temperature characteristic e₃ of the location where the event occurs, and a weather characteristic e₄ of the location where the event occurs.

The location element characteristic e₁ of the location where the event occurs includes key elements of the location where the event occurs, such as traffic intersections, ramps, forks, toll stations, schools, party and government agencies, bridges, slopes, detours, etc.

The road type characteristic e₂ includes an express road, a trunk road, a secondary trunk road, a branch road, etc.

The temperature characteristic e₃ may include a specific temperature value. For example, the environmental characteristic inside and/or outside the vehicle may be collected through temperature sensors.

The weather characteristic e₄ may include sunny, cloudy, rainy, snowy, foggy, etc.

Based on the collection of static environmental characteristic, relevant factors affecting the driving of the vehicle and relevant factors affecting the status of the driver may be obtained. For example, in the weather characteristic, foggy days may easily affect the driver's visual distance and may also reduce the friction between the vehicle and the ground.

The dynamic environmental characteristic may include factors that have a dynamical changing in the environment when a vehicle event occurs. For example, the dynamic environmental characteristic may include one or both of a quantity characteristic of traffic flow and a front-to-vehicle distance characteristic of a current lane.

The dynamic environmental characteristic represents information about dynamic changes in the environment when a vehicle event occurs, and may be expressed as: ${M}_{2} = \left[\begin{matrix}{f}_{1} & {f}_{2} & {f}_{3} \\ {d}_{1} & {d}_{2} & {d}_{3}\end{matrix}\right]$

In the above expression, f₁ represents a quantity of traffic flow at a beginning of the vehicle event, f₂ represents a quantity of traffic flow at an end of the vehicle event, f₃ represents a distribution characteristic of the quantity of traffic flow, for quantities of traffic flow collected at a predetermined time interval in a duration of the vehicle event, and maybe expressed as: ${f}_{3} = \left[\begin{matrix}{a}_{1} & {n}_{a 1} \\ {a}_{2} & {n}_{a 2} \\ … & … \\ {a}_{i} & {n}_{ai}\end{matrix}\right]$.

Where, aᵢ represents the traffic quantity, nₐᵢ represents the number of occurrences when the traffic quantity is aᵢ during a continuous process of the event.

d₁ represents a front-to-vehicle distance of the lane at the beginning of the vehicle event, that is, the distance between the vehicle and the vehicle in front. d₂ represents a front-to-vehicle distance of the lane at the end of the vehicle event. d₃ represents a distribution characteristic of the front-to-vehicle distance of the lane in the duration of the vehicle event. d₃ may be expressed by the number of occurrences of the front-to-vehicle distance of the lane collected at a predetermined time interval in the duration of the vehicle event, for example, d₃ may be expressed as: ${d}_{3} = \left[\begin{matrix}{b}_{1} & {n}_{b 1} \\ {b}_{2} & {n}_{b 2} \\ … & … \\ {b}_{i} & {n}_{bi}\end{matrix}\right]$

Where, bᵢ represents the front-to-vehicle distance of the lane collected during the event, n_{bi} represents the number of occurrences when the front-to-vehicle distance of the lane is bᵢ in the data collected at a predetermined time interval in a duration of the event.

The vehicle kinetic energy characteristic may include a vehicle state at the beginning of the event, a vehicle state at the end of the event, and a distribution characteristic of vehicle states in a duration of the event. The vehicle state may include one or more of a speed of the vehicle, a longitudinal acceleration of the vehicle, a lateral acceleration of the vehicle, a vertical acceleration of the vehicle, and a relative position of the vehicle to the lane line during the event.

For example, the vehicle kinetic energy characteristic may be used to indicate a severity of the event, and may be expressed as: ${M}_{3} = \left[\begin{matrix}{v}_{1} & {v}_{2} & {v}_{3} \\ {p}_{1} & {p}_{2} & {p}_{3} \\ {h}_{1} & {h}_{2} & {h}_{3} \\ {z}_{1} & {z}_{2} & {z}_{3} \\ {l}_{1} & {l}_{2} & {l}_{3}\end{matrix}\right]$

In the above expression, the vehicle kinetic energy characteristic may include: one or more of the speed v of the vehicle, the longitudinal acceleration p of the vehicle, the lateral acceleration h of the vehicle, the vertical acceleration z of the vehicle, and the relative position l of the vehicle to the lane line.

The speed v of the vehicle may include a speed v₁ of the vehicle at the beginning of the event, a speed v₂ at the end of the event, and a distribution characteristic v₃ of the speed collected by the vehicle in the duration of the event. The distribution characteristic v₃ of the speed may be expressed as: ${v}_{3} = \left[\begin{matrix}{g}_{1} & {n}_{g 1} \\ {g}_{2} & {n}_{g 2} \\ … & … \\ {g}_{i} & {n}_{gi}\end{matrix}\right]$

In the above expression, gᵢ represents a speed collected at a predetermined time interval in the duration of the event, and n_{gi} represents the number of times the speed gᵢ is collected in the duration of the event.

The longitudinal acceleration of the vehicle may include a longitudinal acceleration p₁ of the vehicle at the beginning of the event, a longitudinal acceleration p₂ at the end of the event, and a distribution characteristic p₃ of the longitudinal acceleration in the duration of the event. p₃ may be expressed as: ${p}_{3} = \left[\begin{matrix}{k}_{1} & {n}_{k 1} \\ {k}_{2} & {n}_{k 2} \\ … & … \\ {k}_{i} & {n}_{ki}\end{matrix}\right]$

In the above expression, kᵢ represents the longitudinal acceleration collected at a predetermined time interval in the duration of the event, and nₖᵢ represents the number of times the longitudinal acceleration kᵢ is collected in the duration of the event.

The lateral acceleration of the vehicle may include a lateral acceleration h₁ of the vehicle at the beginning of the event, a lateral acceleration h₂ at the end of the event, and a distribution characteristic h₃ of the lateral acceleration in the duration of the event. h₃ may be expressed as: ${h}_{3} = \left[\begin{matrix}{o}_{1} & {n}_{o 1} \\ {o}_{2} & {n}_{o 2} \\ … & … \\ {o}_{i} & {n}_{oi}\end{matrix}\right]$

In the above expression, oᵢ represents the lateral acceleration collected at a predetermined time interval in the duration of the event, nₒᵢ represents the number of times the lateral acceleration collected in the duration of the event.

The vertical acceleration of the vehicle may include a vertical acceleration z₁ of the vehicle at the beginning of the event, a vertical acceleration z₂ at the end of the event, and a distribution characteristic z₃ of the vertical acceleration in the duration of the event. z₃ may be expressed as: ${z}_{3} = \left[\begin{matrix}{q}_{1} & {n}_{q 1} \\ {q}_{2} & {n}_{q 2} \\ … & … \\ {q}_{i} & {n}_{qi}\end{matrix}\right]$

In the above expression, qᵢ represents the vertical acceleration collected at a predetermined time interval in the duration of the event, n_{qi} represents the number of times the vertical acceleration collected in the duration of the event.

The relative position of the vehicle to the lane line may be represented by a position between the vehicle and the lane line. The position between the vehicle and the lane line may include a position l₁ at the beginning of the event, a position l₂ at the end of the event, and a distribution characteristic l₃ of the position in the duration of the event. l₃ may be expressed as: ${l}_{3} = \left[\begin{matrix}{c}_{1} & {n}_{c 1} \\ {c}_{2} & {n}_{c 2} \\ … & … \\ {c}_{i} & {n}_{ci}\end{matrix}\right]$

In the above expression, cᵢ represents the position between the vehicle and the lane line collected at a predetermined time interval in the duration of the event, and n_{ci} represents the number of times the position cᵢ between the vehicle and the lane line is collected in the duration of the event.

The event degree characteristic in the embodiment of the present application is used to represent a characteristic of an overall severity as determined according to the attribute and type of the event after the event occurs. Depending on a specific type of the event, the event degree characteristic may include one or more of the following: a degree characteristic of sharp acceleration, a degree characteristic of sharp turning, a degree characteristic of sharp deceleration, a degree characteristic of acceleration, a degree characteristic of deceleration, a degree characteristic of turning, a degree characteristic of vibration, a degree characteristic of speeding, a degree characteristic of low speed, a degree characteristic of relative collision, a degree characteristic of pedestrian collision, a degree characteristic of lane keeping, a degree characteristic of eye closing, a degree characteristic of yawning, a degree characteristic of head lowering, a degree characteristic of left-and-right observation, a degree characteristic of down glancing, a degree characteristic of talking on or playing with a mobile phone, a degree characteristic of smoking, a degree characteristic of eating and drinking, a degree characteristic of unfastened seat belt, a degree characteristic of one-hand off handlebar, a degree characteristic of both-hand off handlebar and a degree characteristic of facial expression.

For each event itself, the degree characteristic may include a duration of the event, a duration of driving when the event occurs, a frequency when the event occurs and an attribute value of the event.

The degree characteristic of sharp acceleration may be expressed as: $M 4 = \left[Dur4 D-Time4 Freq4 H-Acc\right]$

In the above expression, Dur4 represents a duration of a sharp acceleration event, D-Time4 represents a duration the driver has been driving (the duration of continuous driving without rest, or the duration of driving for this trip) when the sharp acceleration event occurs, and Freq4 represents a frequency with which the sharp acceleration event occurs, where a duration range may be preset, and Freq4 is the frequency of the same sharp acceleration event occurring within the predetermined duration range before the current event occurs. H-Acc represents an attribute value of the sharp acceleration event, for example, the attribute value may include an acceleration of the sharp acceleration event. The sharp acceleration event may be an acceleration event when the acceleration of the vehicle is greater than or equal to a predetermined acceleration threshold.

The degree characteristic of sharp deceleration may be expressed as: $M 5 = \left[Dur5 D-Time5 Freq5 H-Dec\right]$

In the above expression, Dur5 represents a duration of a sharp deceleration event, D-Time5 represents a duration the driver has been driving (the duration of continuous driving without rest, or the duration of driving for this trip) when the sharp deceleration event occurs, and Freq5 represents a frequency with which the sharp deceleration event occurs, where a duration range may be preset, and Freq5 is the frequency of the same sharp deceleration event occurring within the predetermined duration range before the current event occurs. H-Dec represents an attribute value of the sharp deceleration event, for example, the attribute value may include an acceleration (negative value) of the sharp deceleration event. The sharp deceleration event may be a deceleration event when the acceleration of the vehicle is smaller than or equal to a predetermined acceleration threshold.

The degree characteristic of sharp turning may be expressed as: $M 6 = \left[Dur6 D-Time6 Freq6 H-Turn DIR\right]$

In the above expression, Dur6 represents a duration of a sharp turning event, D-Time6 represents a duration the driver has been driving (the duration of continuous driving without rest, or the duration of driving for this trip) when the sharp turning event occurs, and Freq6 represents a frequency with which the sharp turning event occurs, where a duration range may be preset, and Freq6 is the frequency of the same sharp deceleration event occurring within the predetermined duration range before the current event occurs. H-Turn represents an attribute value of the sharp turning event, for example, the attribute value may include a turning angle, a turning speed, etc., of the sharp turning event. DIR represents a lateral direction angle during the sharp turning event, that is, an angle between directions perpendicular to the vehicle speed direction, which is used to represent a turning degree of the sharp turning. The sharp turning event may be that a vehicle turning angle is greater than a predetermined angle value, and the turning speed is greater than a predetermined speed threshold.

The degree characteristic of acceleration may be expressed as: $M 7 = \left[Dur7 D-Time7 Freq7 Acc\right]$

In the above expression, Dur7 represents a duration of an acceleration event, D-Time7 represents a duration the driver has been driving (the duration of continuous driving without rest, or the duration of driving for this trip) when the acceleration event occurs, and Freq7 represents a frequency with which the acceleration event occurs, where a duration range may be preset, and Freq7 is the frequency of the same acceleration event occurring within the predetermined duration range before the current event occurs. Acc represents an attribute value of the acceleration event, and the attribute value includes such as an acceleration magnitude, an acceleration duration, etc., during the acceleration. The acceleration event may refer to a state when the vehicle is accelerating.

The degree characteristic of deceleration may be expressed as: $M 8 = \left[Dur8 D-Time8 Freq8 Dec\right]$

In the above expression, Dur8 represents a duration of an deceleration event, D-Time8 represents a duration the driver has been driving when the deceleration event occurs (the duration of continuous driving without rest, or the duration of driving for this trip), and Freq8 represents a frequency with which the deceleration event occurs, where a duration range may be preset, and Freq8 is the frequency of the same deceleration event occurring within the predetermined duration range before the current event occurs. Dec represents an attribute value of the deceleration event, and the attribute value includes such as an acceleration magnitude, a deceleration duration, etc., during the deceleration. The deceleration event can refer to a state when the vehicle is decelerating.

The degree characteristic of turning may be expressed as: $M 9 = \left[Dur9 D-Time9 Freq9 Turn DIR9\right]$

In the above expression, Dur9 represents a duration of a turning event, D-Time9 represents a duration the driver has been driving (the duration of continuous driving without rest, or the duration of driving for this trip) when the turning event occurs, and Freq9 represents a frequency of the turning event, where a duration range may be preset, and Freq9 is the frequency of the same turning event occurring within the predetermined duration range before the current event occurs. Turn represents an attribute value of the turning event, and the attribute value includes such as a speed, a turning distance, etc., during the turning. DIR9 represents a lateral direction angle during the turning event, that is, an angle between directions perpendicular to the vehicle speed direction, which is used to represent the degree of the turning. The turning event may refer to a state when the vehicle is in arc motion.

The degree characteristic of vibration may be expressed as: $M 10 = \left[Dur10 D-Time10 Freq10 Shock Avg-T-INR\right]$

In the above expression, Dur10 represents a duration of a vibration event, D-Time10 represents a duration the driver has been driving (the duration of continuous driving without rest, or the duration of driving for this trip) when the vibration event occurs, and Freq10 represents a frequency with which the vibration event occurs, where a duration range may be preset, and Freq10 is the frequency of the same vibration event occurring within the predetermined duration range before the current event occurs. Shock represents an attribute value of the vibration event, and the attribute value includes such as a vibration frequency, a vibration amplitude, etc., of the vibration event. Avg - T - INR represents an average time interval of the vibration event. The vibration event may refer to a state when the vehicle is in up and down vibration.

The degree characteristic of speeding may be expressed as: $M 11 = \left[Dur11 D-Time11 Freq11 Over-V Lim\right]$

In the above expression, Dur11 represents a duration of a speeding event, D-Time11 represents a duration the driver has been driving (the duration of continuous driving without rest, or the duration of driving for this trip) when the speeding event occurs, and Freq11 represents a frequency with which the speeding event occurs, where a duration range may be preset, and Freq11 is the frequency of the same speeding event occurring within the predetermined duration range before the current event occurs. Over-V represents an attribute value of the speeding event, and the attribute value includes such as, a speeding amplitude, etc., of the speeding event. Lim represents a speed limit value of a lane where the speeding event occurs. The speeding event may be determined to be in a state of speeding by detecting that the vehicle is above the speed limit value.

The degree characteristic of relative collision may be expressed as: $M 13 = \left[Dur13 D-Time13 Freq13 FCW FCW-Tr\right]$

In the above expression, Dur13 represents a duration of a relative collision event, D-Time13 represents a duration the driver has been driving (the duration of continuous driving without rest, or the duration of driving for this trip) when the relative collision event occurs, and Freq13 represents a frequency with which the relative collision event occurs, where a duration range may be preset, and Freq13 is the frequency of the same relative collision event occurring within the predetermined duration range before the current event occurs. FCW represents an attribute value of the relative collision event, and the attribute value includes such as a relative minimum time, a minimum distance, etc., of the relative collision event. FCW - Tr represents a distribution characteristic of relative collision time, indicating the number of times the certain relative collision time occurs during driving. Time distribution of relative collisions may be represented by a two-dimensional matrix, for example may be expressed as: $FCW - Tr = \left[\begin{matrix}{t}_{1} & {n}_{t 1} \\ {t}_{2} & {n}_{t 2} \\ … & … \\ {t}_{i} & {n}_{ti}\end{matrix}\right]$

In the above expression, tᵢ represents the relative collision time when the relative collision occurs, and nₜᵢ represents the number of times the relative collision time occurs. Relative collision refers to an event where a vehicle collides with a vehicle traveling in an opposite direction.

The degree characteristic of pedestrian collision may be expressed as: $M 14 = \left[Dur14 D-Time14 Freq14 Ped-Col Ped-Ta\right]$

In the above expression, Dur14 represents a duration of a pedestrian collision event, D-Time14 represents a duration the driver has been driving (the duration of continuous driving without rest, or the duration of driving for this trip) when the pedestrian collision event occurs, and Freq14 represents a frequency with which the pedestrian collision event occurs, where a duration range may be preset, and Freq14 is the frequency of the same relative collision event occurring within the predetermined duration range before the current event occurs. Ped - Col represents an attribute value of the pedestrian collision event, and the attribute value includes such as an absolute minimum time, a minimum distance, etc., of the pedestrian collision event. Ped - Ta represents a distribution characteristic the absolute collision time when the pedestrian collision occurs, indicating the number of times the certain absolute collision time occurs during driving. Time distribution of pedestrian collisions may be represented by a two-dimensional matrix, for example may be expressed as: $Ped - Ta = \left[\begin{matrix}{t}_{p 1} & {n}_{tp 1} \\ {t}_{p 2} & {n}_{tp 2} \\ … & … \\ {t}_{pi} & {n}_{tpi}\end{matrix}\right]$

In the above expression, tₚᵢ represents the time when the pedestrian collision occurs, and nₜₚᵢ represents the number of times the absolute collision time occurs when the pedestrian collision occurs.

The degree characteristic of lane keeping may be expressed as: $M 15 = \left[Dur15 D-Time15 Freq15 LDW Lane-T DIR15\right]$

In the above expression, Dur15 represents a duration of a lane keeping event, D-Time15 represents a duration the driver has been driving (the duration of continuous driving without rest, or the duration of driving for this trip) when the lane keeping event occurs, and Freq15 represents a frequency with which the lane keeping event occurs, where a duration range may be preset, and Freq15 is the frequency of the same lane keeping event occurring within the predetermined duration range before the current event occurs. LDW represents an attribute value of the lane keeping event, and the attribute value includes such as, a lane deviation degree, etc., of the lane keeping event. Lane - T represents a type of lane line of the lane keeping event, including a solid line, a dotted line, etc. DIR15 represents a lateral angle of the vehicle during the lane keeping event, that is, the magnitude of the lateral angle between a vehicle and the automobile.

The degree characteristic of eye closing may be expressed as: $M 16 = \left[Dur16 D-Time16 Freq16 C-Eye\right]$

In the above expression, Dur16 represents a duration of an eye-closing event, D-Time16 represents a duration the driver has been driving (the duration of continuous driving without rest, or the duration of driving for this trip) when the eye-closing event occurs, and Freq16 represents a frequency with which the eye-closing event occurs, where a duration range may be preset, and Freq16 is the frequency of the same eye-closing event occurring within the predetermined duration range before the current event occurs. C - Eye represents an attribute value of the eye-closing event, and the attribute value includes such as, an amplitude of eye closing, etc.

The degree characteristic of yawning may be expressed as: $M 17 = \left[Dur17 D-Time17 Freq17 Yawn M-Prop\right]$

In the above expression, Dur17 represents a duration of a yawning event, D-Time17 represents a duration the driver has been driving (the duration of continuous driving without rest, or the duration of driving for this trip) when the yawning event occurs, and Freq17 represents a frequency with which the yawning event occurs, where a duration range may be preset, and Freq17 is the frequency of the same yawning event occurring within the predetermined duration range before the current event occurs. Yawn represents an attribute value of the yawning event, and the attribute value includes such as, an amplitude of yawning, etc. M-Prop represents a distribution characteristic of a mouth length-to-width ratio of yawning, which may be represented by a two-dimensional matrix, for example may be represented as: $M - Prop = \left[\begin{matrix}{pr}_{1} & {n}_{pr 1} \\ {pr}_{2} & {n}_{pr 2} \\ … & … \\ {pr}_{i} & {n}_{pri}\end{matrix}\right]$

In the above expression, prᵢ is proportional data of the mouth length-to-width ratio, nₚᵣᵢ is the number of times the proportional of the mouth length-to-width ratio occurs according to a predetermined collection interval.

The degree characteristic of head lowering may be represented as: $M 18 = \left[Dur18 D-Time18 Freq18 L-Down D-Angle\right]$

In the above expression, Dur18 represents a duration of a head-lowering event, D-Time18 represents a duration the driver has been driving (the duration of continuous driving without rest, or the duration of driving for this trip) when the head-lowering event occurs, and Freq18 represents a frequency with which the head-lowering event occurs, where a duration range may be preset, and Freq18 is the frequency of the same head-lowering event occurring within the predetermined duration range before the current event occurs. L - Down represents an attribute value of the head-lowering event, and the attribute value includes such as, a degree of head lowering, etc. D-Angle represents a distribution characteristic of head lowering angles, which may be represented by a two-dimensional matrix, for example may be represented as: $D - Angle = \left[\begin{matrix}{da}_{1} & {n}_{da 1} \\ {da}_{2} & {n}_{da 2} \\ … & … \\ {da}_{i} & {n}_{dai}\end{matrix}\right]$

In the above expression, daᵢ is an angle of head lowering, n_{dai} is the number of times the angle of the head lowering occurs according to a predetermined collection interval.

The degree characteristic of left-and-right observation may be expressed as: $M 19 = \left[Dur19 D-Time19 Freq19 L-Around A-Angle\right]$

In the above expression, Dur19 represents a duration of a left-and-right observation event, D-Time19 represents a duration the driver has been driving (the duration of continuous driving without rest, or the duration of driving for this trip) when the left-and-right observation event occurs, and Freq19 represents a frequency with which the left-and-right observation event occurs, where a duration range may be preset, and Freq19 is the frequency of the same left-and-right observation event occurring within the predetermined duration range before the current event occurs. L - Around represents an attribute value of the left-and-right observation event, and the attribute value includes such as, a degree of left-and-right observation, etc. A-Angle represents an angle distribution characteristic of the left-and-right observation, which may be represented by a two-dimensional matrix, for example may be represented as: $A - Angle = \left[\begin{matrix}{aa}_{1} & {n}_{aa 1} \\ {aa}_{2} & {n}_{aa 2} \\ … & … \\ {aa}_{i} & {n}_{aai}\end{matrix}\right]$

In the above expression, aaᵢ is an angle of the left-and-right observation, and nₐₐᵢ is the number of times the angle of the left-and-right observation occurs according to a predetermined collection interval.

The degree characteristic of down glancing may be expressed as: $M 20 = \left[Dur20 D-Time20 Freq20 G-Down\right]$

In the above expression, Dur20 represents a duration of a down-glancing event, D-Time20 represents a duration the driver has been driving (the duration of continuous driving without rest, or the duration of driving for this trip) when the down-glancing event occurs, and Freq20 represents a frequency with which the down-glancing event occurs, where a duration range may be preset, and Freq20 is the frequency of the same down-glancing event occurring within the predetermined duration range before the current event occurs. G - Down represents an attribute value of the down-glancing event, and the attribute value includes such as, a degree of down glancing, etc.

The degree characteristic of talking on or playing with a mobile phone may be expressed as: $M 21 = \left[Dur21 D-Time21 Freq21 P-Phone\right]$

In the above expression, Dur21 represents a duration of a mobile phone calling or playing event, D-Time21 represents a duration the driver has been driving (the duration of continuous driving without rest, or the duration of driving for this trip) when the mobile phone calling or playing event occurs, and Freq21 represents a frequency with which the mobile phone calling or playing event occurs, where a duration range may be preset, and Freq21 is the frequency of the same mobile phone calling or playing event occurring within the predetermined duration range before the current event occurs. P - Phone represents an attribute value of the mobile phone calling or playing event, and the attribute value includes such as a posture, an excitement, etc., when taking on or playing with the mobile phone.

The degree characteristic of smoking may be expressed as: $M 22 = \left[Dur22 D-Time22 Freq22 Smoke\right]$

In the above expression, Dur22 represents a duration of a smoking event, D-Time22 represents a duration the driver has been driving (the duration of continuous driving without rest, or the duration of driving for this trip) when the smoking event occurs, and Freq22 represents a frequency with which the smoking event occurs, where a duration range may be preset, and Freq22 is the frequency of the same smoking event occurring within the predetermined duration range before the current event occurs. Smoke represents an attribute value of the smoking event, and the attribute value includes such as the number of cigarettes smoked, a posture, etc.

The degree characteristic of eating and drinking may be expressed as: $M 23 = \left[Dur23 D-Time23 Freq23 E&D\right]$

In the above expression, Dur23 represents a duration of a eating-and-drinking event, D-Time23 represents a duration the driver has been driving (the duration of continuous driving without rest, or the duration of driving for this trip) when the eating-and-drinking event occurs, and Freq23 represents a frequency with which the eating-and-drinking event occurs, where a duration range may be preset, and Freq23 is the frequency of the same eating-and-drinking event occurring within the predetermined duration range before the current event occurs. E&D represents an attribute value of the eating-and-drinking event, and the attribute value includes such as a content of eating, a motion amplitude of drinking or eating, etc.

The degree characteristic of unfastened seat belt may be expressed as: $M 27 = \left[Dur27 D-Time27 Freq27 S-Belt\right]$

In the above expression, Dur27 represents a duration of an unfastened seat belt event, D-Time27 represents a duration the driver has been driving (the duration of continuous driving without rest, or the duration of driving for this trip) when the unfastened seat belt event occurs, and Freq27 represents a frequency with which the unfastened seat belt event occurs, where a duration range may be preset, and Freq27 is the frequency of the same unfastened seat belt event occurring within the predetermined duration range before the current event occurs. S - Belt represents an attribute value of the unfastened seat belt event, and the attribute value includes such as not wearing the seat belt properly, or forgetting to wear the seat belt, etc.

The degree characteristic of one-hand off handlebar may be expressed as: $M 24 = \left[Dur24 D-Time24 Freq24 O-Handlet\right]$

In the above expression, Dur24 represents a duration of an one-hand off handlebar event, D-Time24 represents a duration the driver has been driving (the duration of continuous driving without rest, or the duration of driving for this trip) when the one-hand off handlebar event occurs, and Freq24 represents a frequency with which the one-hand off handlebar event occurs, where a duration range may be preset, and Freq24 is the frequency of the same one-hand off handlebar event occurring within the predetermined duration range before the current event occurs. O - Handlet represents an attribute value of the one-hand off handlebar event, and the attribute value includes such as, a distance of one hand off a handlebar, etc. Herein, one hand off handlebar refers to that the driver is in a state of holding the steering wheel with one hand.

The degree characteristic of both-hands off handlebar may be expressed as: $M 25 = \left[Dur25 D-Time25 Freq25 N-Handlet\right]$

In the above expression, Dur25 represents a duration of a both-hands off handlebar event, D-Time25 represents a duration the driver has been driving (the duration of continuous driving without rest, or the duration of driving for this trip) when the both-hands off the handlebars event occurs, and Freq25 represents a frequency with which the both-hands off handlebar event occurs, where a duration range may be preset, and Freq25 is the frequency of the same both-hands off handlebars event occurring within the predetermined duration range before the current event occurs. N - Handlet represents an attribute value of the both-hands off handlebars event, and the attribute value includes such as a distance of both hands off a handlebar. Herein, both hands off the handlebar refers to that the driver is in a state where both hands are off the steering wheel.

The degree characteristic of facial expression may be expressed as: $M 26 = \left[Dur26 D-Time26 Freq26 Expr\right]$

In the above expression, Dur26 represents a duration of a facial expression event, D-Time26 represents a duration the driver has been driving (the duration of continuous driving without rest, or the duration of driving for this trip) when the facial expression event occurs, and Freq26 represents a frequency with which the facial expression event occurs, where a duration range may be preset, and Freq26 is the frequency of the same facial expression event occurring within the predetermined duration range before the current event occurs. Expr represents an attribute value the facial expression event, and the attribute value includes for example a content of the facial expression, such as laughing, crying, angry, happy, sad, etc. Herein, the facial expression refers to a facial expression of the driver in a driving state.

In step S102, the static environmental characteristic, the dynamic environmental characteristic, the vehicle kinetic energy characteristic, and the event degree characteristic are input into a fully-connected neural network that has been trained in advance, and an evaluation result of the event is calculated by means of the fully-connected neural network.

After the static environmental characteristic, the dynamic environmental characteristic, the vehicle kinetic energy characteristic and the event degree characteristic are determined, the characteristic information is input into the pre-trained fully-connected neural network, and the evaluation result of the event is calculated by the trained fully-connected neural network. The calculated evaluation result of the event may include evaluation results such as good, bad, neutral, etc., or may also be a result of a comprehensive score of the event.

When using the fully-connected neural network to calculate the evaluation result corresponding to the characteristic information, the evaluation result of the event is obtained by nested computation through multiple fully-connected layers. In the schematic diagram of the fully-connected neural network for calculating the evaluation result shown in FIG. 2, the static environmental characteristic and dynamic environmental characteristic is calculated through a first fully-connected layer to obtain an environmental characteristic value, the vehicle kinetic energy characteristic is calculated through a second fully-connected layer to obtain a vehicle kinetic energy characteristic value of the event, and the event degree characteristic is calculated through a third fully-connected layer to obtain an event degree characteristic value. The environmental characteristic value, the vehicle kinetic energy characteristic value and the event degree characteristic value are further calculated through a fourth fully-connected layer to obtain the evaluation result of the event.

The present invention effectively solves the problem that the evaluation factors of alarm events are too single by introducing static environmental characteristic, dynamic environmental characteristic, vehicle kinetic energy characteristic and event degree characteristic; and introduces characteristic information such as the time of occurrence of the alarm event, duration, surrounding environment, weather conditions, event degree, frequency of occurrence per unit time, and continuity of event occurrence, to fully characterize the event from multi-dimensional information, thereby helping to improve the accuracy of event evaluation.

In addition, in the present invention, by introducing multi-dimensional information of the event, constructing a matrix of characteristics, and utilizing multiple fully-connected layers to obtain the environmental characteristics, the vehicle kinetic energy characteristic, and the degree characteristic of the event itself, and to eventually evaluate the event, a score result of the event can better reflect the characteristics of the event itself.

It should be understood that the sequence number of each step in the above embodiment does not mean an order of execution. The execution order of each process should be determined by its function and internal logic, and should not constitute any limitation on the implementation processes of the embodiments of the present invention.

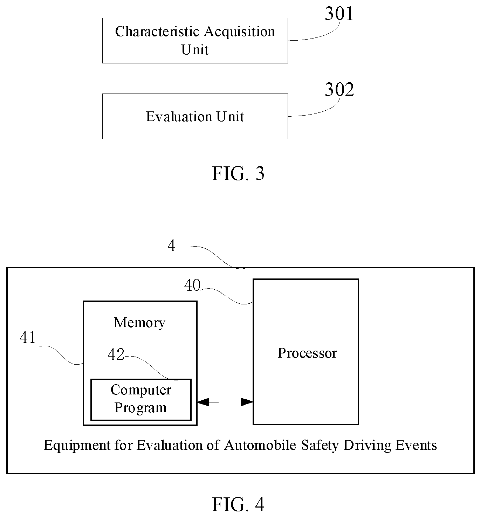

FIG. 3 is a schematic diagram of a device for evaluation of automobile safety driving events provided by an embodiment of the present application. As shown in FIG. 3, the device includes: a characteristic acquisition unit 301 and an evaluation unit 302.

The characteristic acquisition unit 301 is configured to obtain an event's static environmental characteristic, dynamic environmental characteristic, vehicle kinetic energy characteristic and degree characteristic of the event itself.

The evaluation unit 302 is configured to input the static environmental characteristic, the dynamic environmental characteristic, the vehicle kinetic energy characteristic and the degree characteristic of the event itself into a fully-connected neural network that has been trained, and calculate an evaluation result of the event by means of the fully-connected neural network.

The device for evaluation of the automobile safety driving events shown in FIG. 3 corresponds to the method for evaluation of the automobile safety driving events shown in FIG. 1.

FIG. 4 is a schematic diagram of a piece of equipment for evaluation of automobile safety driving events provided by an embodiment of the present application. As shown in FIG. 4, the equipment 4 for evaluation of automobile safety driving events of this embodiment includes: a processor 40, a memory 41, and a computer program 42 stored in the memory 41 and executable by the processor 40, such as a program for evaluation of automobile safety driving events. The processor 40, when executing the computer program 42, is configured to implement steps in each method embodiment for evaluation of automobile safety driving events. Alternatively, the processor 40, when executing the computer program 42, is configured to implement functions of each module/unit in the above-mentioned device embodiments.

Exemplarily, the computer program 42 may be divided into one or more modules/units, and the one or more modules/units are stored in the memory 41 and executed by the processor 40 to complete the present application. The one or more modules/units may be a series of computer program instruction segments capable of completing specific functions, and the instruction segments are used to describe an execution process of the computer program 42 in the equipment 4 for evaluation of automobile safety driving events.

The equipment 4 for evaluation of automobile safety driving events may be an automobile, automobile onboard equipment, remote cloud equipment, local area network server equipment, etc. The device for acquiring characteristics may include various sensors, etc. The equipment for evaluation of automobile safety driving events may include, but is not limited to, a processor 40 and a memory 41. Those skilled in the art will understand that FIG. 4 is only an example of the equipment 4 for evaluation of automobile safety driving events, and does not constitute a limitation on the equipment 4 for evaluation of automobile safety driving events. The equipment may include more or fewer components than shown in the figure, or may include a combination of some components, or different components. For example, the equipment for evaluation of automobile safety driving events may also include input and output devices, network access devices, buses, etc.

The processor 40 may be a central processing unit (CPU), or other general-purpose processor, a digital signal processor (DSP), an application specific integrated circuit (ASIC), a field-programmable gate array (FPGA) or other programmable logic devices, discrete gates or transistor logic devices, discrete hardware components, etc. The general-purpose processor may be a microprocessor or the processor may be any conventional processor, etc.

The memory 41 may be an internal storage unit of the equipment 4 for evaluation of automobile safety driving events, such as a hard disk or memory of the equipment 4 for evaluation of automobile safety driving events. The memory 41 may also be an external storage device of the equipment 4 for evaluation of automobile safety driving events, such as a plug-in hard disk, a smart media card (SMC), or a secure digital (SD) card, a flash card, etc., equipped on the equipment 4 for evaluation of automobile safety driving events. Furthermore, the memory 41 may also include both an internal storage unit of the equipment 4 for evaluation of automobile safety driving events and an external storage device. The memory 41 is configured to store the computer program and other programs and data required by the equipment for evaluation of automobile safety driving events. The memory 41 may also be configured to temporarily store data that has been output or is to be output.

It can be clearly understood by those skilled in the art that for the convenience and simplicity of description, only the division of the above-mentioned functional units and modules is exemplarily illustrated. In actual applications, the above-mentioned functions may be assigned to different functional units and modules as needed, that is, an internal structure of the device is divided into different functional units or modules to complete all or part of the functions described above. Each functional unit and module in the embodiment may be integrated into one processing unit, or each unit may exist physically separately, or two or more units may be integrated into one unit, and the above integrated unit may be implemented in the form of hardware or in the form of software functional units. In addition, specific names of various functional unit and module are only for the convenience of distinguishing each other, and are not intended to limit the protection scope of the present application. For specific working process of the units and modules in the above system, references may be made to the corresponding process in the above method embodiment, which will not be repeated here.

In the above embodiments, the description of each embodiment has its own emphasis. For the part that is not described or recorded in detail in a certain embodiment, references may be made to the relevant description of other embodiments.

It would be readily conceivable for a person of ordinary skill in the art that the units and algorithm steps of each example described in combination with the embodiments disclosed in this article may be implemented in electronic hardware, or in a combination of computer software and electronic hardware. Whether these functions are executed in hardware or software depends on the specific application and design constraints of the technical solution.

## Claims

1. A method for evaluation of automobile safety driving events, implemented by evaluation equipment, the method comprising:
obtaining (S101), by sensors of a vehicle, a static environmental characteristic, a dynamic environmental characteristic, a vehicle kinetic energy characteristic and an event degree characteristic of an event; and
inputting (S102) the static environmental characteristic, the dynamic environmental characteristic, the vehicle kinetic energy characteristic and the event degree characteristic into a fully-connected neural network that has been trained in advance, and determining an evaluation result of the event by means of the fully-connected neural network,
**characterized in that**,
the event degree characteristic of the event itself comprises a duration of the event, a duration of driving when the event occurs, a frequency of occurrence of the event and an attribute value of the event, and
wherein the determining the evaluation result of the event by means of the fully-connected neural network comprises: calculating the static environmental characteristic and dynamic environmental characteristic through a first fully-connected layer to obtain an environmental characteristic value; calculating the vehicle kinetic energy characteristic through a second fully-connected layer to obtain a vehicle kinetic energy characteristic value of the event; calculating the event degree characteristic through a third fully-connected layer to obtain an event degree characteristic value; and calculating the environmental characteristic value, the vehicle kinetic energy characteristic value and the event degree characteristic value through a fourth fully-connected layer to obtain the evaluation result of the event.

2. The method according to claim 1, **characterized in that** the event degree characteristic comprises at least one of a degree characteristic of sharp acceleration, a degree characteristic of sharp deceleration, a degree characteristic of sharp turning, a degree characteristic of acceleration, a degree characteristic of deceleration, a degree characteristic of turning, a degree characteristic of vibration, a degree characteristic of speeding, a degree characteristic of low speed, a degree characteristic of relative collision, a degree characteristic of pedestrian collision, a degree characteristic of lane keeping, a degree characteristic of eye closing, a degree characteristic of yawning, a degree characteristic of head lowering, a degree characteristic of left-and-right observation, a degree characteristic of down glancing, a degree characteristic of talking on or playing with a mobile phone, a degree characteristic of smoking, a degree characteristic of eating and drinking, a degree characteristic of unfastened seat belt, a degree characteristic of one-hand off handlebar, a degree characteristic of both-hands off handlebar and a degree characteristic of facial expression.

3. The method according to claim 1, **characterized in that**:
the degree characteristic of sharp turning further comprises a lateral direction angle during a sharp turning;
the degree characteristic of vibration further comprises an average interval duration of a vibration event;
the degree characteristic of speeding further comprises a speed limit value;
the degree characteristic of relative collision further comprises a time distribution characteristic of relative collision occurrence times;
the degree characteristic of pedestrian collision further comprises a time distribution characteristic of pedestrian collisions occurrence times;
the degree characteristic of lane keeping further comprises a type of lane line;
the degree characteristic of yawning further comprises a distribution characteristic of mouth length-to-width ratios;
the degree characteristic of head lowering further comprises an angle distribution characteristic of head lowering; and
the degree characteristic of left-and-right observation further comprises a distribution characteristic of head deflection angles.

4. The method according to claim 1, **characterized in that** the vehicle kinetic energy characteristic comprises a vehicle state at a beginning of the event, a vehicle state at an end of the event and a distribution characteristic of vehicle states in a duration of the event.

5. The method according to claim 4, **characterized in that** the vehicle state comprises at least one of a speed of the vehicle, a longitudinal acceleration of the vehicle, a lateral acceleration of the vehicle, an acceleration in a vertical direction of the vehicle and a relative position of the vehicle to a lane line during the event.

6. The method according to claim 1, **characterized in that** the static environmental characteristic comprises at least one of a characteristic of road location element, a characteristic of road type, a characteristic of temperature and a characteristic of weather, and the dynamic environmental characteristic comprises one or two of a quantity characteristic of a traffic flow and a front-to-vehicle distance characteristic of a current lane.

7. The method according to claim 6, **characterized in that**:
the quantity characteristic of the traffic flow comprises a quantity of the traffic flow at a beginning of the event, a quantity of the traffic flow at an end of the event and a distribution characteristic of quantities of the traffic flow in a duration of the event.
the front-to-vehicle distance characteristic of the current lane comprises a front-to-vehicle distance of the current lane at the beginning of the event, a front-to-vehicle distance of the current lane at the end of the event and a distribution characteristic of front-to-vehicle distance of the current lane in the duration of the event.

8. Equipment (4) for evaluation of automobile safety driving events, comprising a memory (41), a processor (40), and a computer program (42) stored in the memory (41) and executable by the processor (40), **characterized in that** the processor (40), when executing the computer program (42), is configured to implement the steps of the method according to in any one of claims 1 to 7.

9. A computer-readable storage medium in which a computer program (42) is stored, **characterized in that** the computer program (42), when executed by a processor (40), causes the steps of the method according to any one of claims 1 to 7 to be implemented.

## Patentansprüche

1. Verfahren zur Bewertung von Automobilsicherheits-Fahrereignissen, das durch eine Bewertungsausrüstung implementiert wird, wobei das Verfahren umfasst:
Erhalten (S101), durch Sensoren eines Fahrzeugs, einer statischen Umgebungscharakteristik, einer dynamischen Umgebungscharakteristik, einer Fahrzeugbewegungsenergiecharakteristik und einer Ereignisgradcharakteristik eines Ereignisses; und
Eingeben (S102) der statischen Umgebungscharakteristik, der dynamischen Umgebungscharakteristik, der Fahrzeugbewegungsenergiecharakteristik und der Ereignisgradcharakteristik in ein vollständig verbundenes neuronales Netzwerk, das im Voraus trainiert wurde, und Bestimmen eines Bewertungsergebnisses des Ereignisses mittels des vollständig verbundenen neuronalen Netzwerks,
**dadurch gekennzeichnet, dass**
die Ereignisgradcharakteristik des Ereignisses selbst eine Dauer des Ereignisses, eine Dauer des Fahrens, wenn das Ereignis auftritt, eine Häufigkeit des Auftretens des Ereignisses und einen Attributwert des Ereignisses umfasst, und
wobei das Bestimmen des Bewertungsergebnisses des Ereignisses mittels des vollständig verbundenen neuronalen Netzwerks umfasst: Berechnen der statischen Umgebungscharakteristik und der dynamischen Umgebungscharakteristik durch eine erste vollständig verbundene Schicht, um einen Umgebungscharakteristikwert zu erhalten; Berechnen der Fahrzeugbewegungsenergiecharakteristik durch eine zweite vollständig verbundene Schicht, um einen Fahrzeugbewegungsenergiecharakteristikwert des Ereignisses zu erhalten; Berechnen der Ereignisgradcharakteristik durch eine dritte vollständig verbundene Schicht, um einen Ereignisgradcharakteristikwert zu erhalten; und Berechnen des Umgebungscharakteristikwerts, des Fahrzeugbewegungsenergiecharakteristikwerts und des Ereignisgradcharakteristikwerts durch eine vierte vollständig verbundene Schicht, um das Bewertungsergebnis des Ereignisses zu erhalten.

2. Verfahren nach Anspruch 1, **dadurch gekennzeichnet, dass** die Ereignisgradcharakteristik mindestens eines von einer Gradcharakteristik einer scharfen Beschleunigung, einer Gradcharakteristik einer scharfen Abbremsung, einer Gradcharakteristik eines scharfen Abbiegens, einer Gradcharakteristik einer Beschleunigung, einer Gradcharakteristik einer Abbremsung, einer Gradcharakteristik eines Abbiegens, einer Gradcharakteristik einer Vibration, einer Gradcharakteristik einer Geschwindigkeitsüberschreitung, einer Gradcharakteristik einer niedrigen Geschwindigkeit, einer Gradcharakteristik einer relativen Kollision, einer Gradcharakteristik einer Fußgängerkollision, einer Gradcharakteristik eines Spurhaltens, einer Gradcharakteristik eines Augenschließens, einer Gradcharakteristik eines Gähnens, einer Gradcharakteristik eines Kopfabsenkens, einer Gradcharakteristik einer Links-und-Rechts-Beobachtung, einer Gradcharakteristik eines Hinunterblickens, einer Gradcharakteristik eines Sprechens mit oder Spielens mit einem Mobiltelefon, einer Gradcharakteristik eines Rauchens, einer Gradcharakteristik eines Essens und Trinkens, einer Gradcharakteristik eines nicht befestigten Sicherheitsgurts, einer Gradcharakteristik eines von einer Hand entfernten Lenkers, einer Gradcharakteristik eines von beiden Händen entfernten Lenkers und einer Gradcharakteristik eines Gesichtsausdrucks umfasst.

3. Verfahren nach Anspruch 1, **dadurch gekennzeichnet, dass**:
die Gradcharakteristik eines scharfen Abbiegens ferner einen seitlichen Richtungswinkel während eines scharfen Abbiegens umfasst;
die Gradcharakteristik einer Vibration ferner eine durchschnittliche Intervalldauer eines Vibrationsereignisses umfasst;
die Gradcharakteristik einer Geschwindigkeitsüberschreitung ferner einen Geschwindigkeitsgrenzwert umfasst;
die Gradcharakteristik einer relativen Kollision ferner eine Zeitverteilungscharakteristik von relativen Kollisionsauftrittszeiten umfasst;
die Gradcharakteristik einer Fußgängerkollision ferner eine Zeitverteilungscharakteristik von Fußgängerkollisionsauftrittszeiten umfasst;
die Gradcharakteristik eines Spurhaltens ferner eine Art von Spurlinie umfasst;
die Gradcharakteristik eines Gähnens ferner eine Verteilungscharakteristik von Mundlängen-zu-Breiten-Verhältnissen umfasst;
die Gradcharakteristik eines Kopfabsenkens ferner eine Winkelverteilungscharakteristik eines Kopfabsenkens umfasst; und
die Gradcharakteristik einer Links-und-Rechts-Beobachtung ferner eine Verteilungscharakteristik von Kopfauslenkungswinkeln umfasst.

4. Verfahren nach Anspruch 1, **dadurch gekennzeichnet, dass** die Fahrzeugbewegungsenergiecharakteristik einen Fahrzeugzustand zu einem Beginn des Ereignisses, einen Fahrzeugzustand an einem Ende des Ereignisses und eine Verteilungscharakteristik von Fahrzeugzuständen in einer Dauer des Ereignisses umfasst.

5. Verfahren nach Anspruch 4, **dadurch gekennzeichnet, dass** der Fahrzeugzustand mindestens eines von einer Geschwindigkeit des Fahrzeugs, einer Längsbeschleunigung des Fahrzeugs, einer Querbeschleunigung des Fahrzeugs, einer Beschleunigung in einer vertikalen Richtung des Fahrzeugs und einer relativen Position des Fahrzeugs zu einer Spurlinie während des Ereignisses umfasst.

6. Verfahren nach Anspruch 1, **dadurch gekennzeichnet, dass** die statische Umgebungscharakteristik mindestens eines von einer Charakteristik eines Straßenstandortelements, einer Charakteristik eines Straßentyps, einer Charakteristik einer Temperatur und einer Charakteristik eines Wetters umfasst und die dynamische Umgebungscharakteristik eines oder zwei von einer Quantitätscharakteristik eines Verkehrsflusses und einer Front-zu-Fahrzeug-Abstandscharakteristik einer aktuellen Spur umfasst.

7. Verfahren nach Anspruch 6, **dadurch gekennzeichnet, dass**:
die Quantitätscharakteristik des Verkehrsflusses eine Quantität des Verkehrsflusses zu einem Beginn des Ereignisses, eine Quantität des Verkehrsflusses an einem Ende des Ereignisses und eine Verteilungscharakteristik von Quantitäten des Verkehrsflusses in einer Dauer des Ereignisses umfasst.
die Front-zu-Fahrzeug-Abstandscharakteristik der aktuellen Spur einen Front-zu-Fahrzeug-Abstand der aktuellen Spur zu dem Beginn des Ereignisses, einen Front-zu-Fahrzeug-Abstand der aktuellen Spur an dem Ende des Ereignisses und eine Verteilungscharakteristik eines Front-zu-Fahrzeug-Abstands der aktuellen Spur in der Dauer des Ereignisses umfasst.

8. Ausrüstung (4) zur Bewertung von Automobilsicherheits-Fahrereignissen, umfassend einen Speicher (41), einen Prozessor (40) und ein Computerprogramm (42), das in dem Speicher (41) gespeichert und durch den Prozessor (40) ausführbar ist, **dadurch gekennzeichnet, dass** der Prozessor (40), wenn er das Computerprogramm (42) ausführt, konfiguriert ist, um die Schritte des Verfahrens nach einem der Ansprüche 1 bis 7 zu implementieren.

9. Computerlesbares Speichermedium, in dem ein Computerprogramm (42) gespeichert ist, **dadurch gekennzeichnet, dass** das Computerprogramm (42), wenn es durch einen Prozessor (40) ausgeführt wird, bewirkt, dass die Schritte des Verfahrens nach einem der Ansprüche 1 bis 7 implementiert werden.

## Revendications

1. Procédé d'évaluation d'événements de conduite de sécurité automobile, mis en œuvre par un équipement d'évaluation, le procédé comprenant :
obtenir (S101), par des capteurs d'un véhicule, une caractéristique d'environnement statique, une caractéristique d'environnement dynamique, une caractéristique d'énergie cinétique de véhicule et une caractéristique de degré d'événement d'un événement ; et
entrer (S102) la caractéristique d'environnement statique, la caractéristique d'environnement dynamique, la caractéristique d'énergie cinétique de véhicule et la caractéristique de degré d'événement dans un réseau neuronal entièrement connecté qui a été entraîné à l'avance, et déterminer un résultat d'évaluation de l'événement au moyen du réseau neuronal entièrement connecté,
**caractérisé en ce que**,
la caractéristique de degré d'événement de l'événement elle-même comprend une durée de l'événement, une durée de conduite lorsque l'événement se produit, une fréquence d'occurrence de l'événement et une valeur d'attribut de l'événement, et
dans lequel la détermination du résultat d'évaluation de l'événement au moyen du réseau neuronal entièrement connecté comprend : calculer la caractéristique d'environnement statique et la caractéristique d'environnement dynamique par l'intermédiaire d'une première couche entièrement connectée pour obtenir une valeur de caractéristique d'environnement ; calculer la caractéristique d'énergie cinétique de véhicule par l'intermédiaire d'une deuxième couche entièrement connectée pour obtenir une valeur de caractéristique d'énergie cinétique de véhicule de l'événement ; calculer la caractéristique de degré d'événement par l'intermédiaire d'une troisième couche entièrement connectée pour obtenir une valeur de caractéristique de degré d'événement ; et calculer la valeur de caractéristique d'environnement, la valeur de caractéristique d'énergie cinétique de véhicule et la valeur de caractéristique de degré d'événement par l'intermédiaire d'une quatrième couche entièrement connectée pour obtenir le résultat d'évaluation de l'événement.

2. Procédé selon la revendication 1, **caractérisé en ce que** la caractéristique de degré d'événement comprend au moins l'une d'une caractéristique de degré d'accélération brusque, d'une caractéristique de degré de décélération brusque, d'une caractéristique de degré de tournant brusque, d'une caractéristique de degré d'accélération, d'une caractéristique de degré de décélération, d'une caractéristique de degré de tourner, d'une caractéristique de degré de vibration, d'une caractéristique de degré d'excès de vitesse, d'une caractéristique de degré de faible vitesse, d'une caractéristique de degré de collision relative, d'une caractéristique de degré de collision avec un piéton, d'une caractéristique de degré de maintien de voie, d'une caractéristique de degré de fermeture des yeux, d'une caractéristique de degré de bailler, d'une caractéristique de degré d'abaissement de tête, d'une caractéristique de degré d'observation gauche-droite, d'une caractéristique de degré de bâillement vers le bas, d'une caractéristique de degré de parler sur ou de jouer avec un téléphone mobile, d'une caractéristique de degré de fumer, d'une caractéristique de degré de manger et de boire, d'une caractéristique de degré de ceinture de sécurité non attachée, d'une caractéristique de degré de relâcher le guidon d'une main, d'une caractéristique de degré de relâcher le guidon des deux mains et d'une caractéristique de degré d'expression faciale.

3. Procédé selon la revendication 1, **caractérisé en ce que** :
la caractéristique de degré de tournant brusque comprend en outre un angle de direction latérale pendant un tournant brusque ;
la caractéristique de degré de vibration comprend en outre une durée d'intervalle moyenne d'un événement de vibration ;
la caractéristique de degré d'excès de vitesse comprend en outre une valeur limite de vitesse ;
la caractéristique de degré de collision relative comprend en outre une caractéristique de distribution temporelle de temps d'occurrence de collision relative ;
la caractéristique de degré de collision avec un piéton comprend en outre une caractéristique de distribution temporelle de temps d'occurrence de collision avec un piéton ;
la caractéristique de degré de maintien de voie comprend en outre un type de ligne de voie ;
la caractéristique de degré de bailler comprend en outre une caractéristique de distribution de rapports longueur/largeur de bouche ;
la caractéristique de degré d'abaissement de tête comprend en outre une caractéristique de distribution d'angle d'abaissement de tête ; et
la caractéristique de degré d'observation gauche-droite comprend en outre une caractéristique de distribution d'angles de déviation de tête.

4. Procédé selon la revendication 1, **caractérisé en ce que** la caractéristique d'énergie cinétique de véhicule comprend un état de véhicule à un début de l'événement, un état de véhicule à une fin de l'événement et une caractéristique de distribution d'états de véhicule dans une durée de l'événement.

5. Procédé selon la revendication 4, **caractérisé en ce que** l'état de véhicule comprend au moins l'une d'une vitesse du véhicule, d'une accélération longitudinale du véhicule, d'une accélération latérale du véhicule, d'une accélération dans une direction verticale du véhicule et d'une position relative du véhicule par rapport à une ligne de voie pendant l'événement.

6. Procédé selon la revendication 1, **caractérisé en ce que** la caractéristique d'environnement statique comprend au moins l'une d'une caractéristique d'élément de localisation de route, d'une caractéristique de type de route, d'une caractéristique de température et d'une caractéristique de météo, et la caractéristique d'environnement dynamique comprend une ou deux d'une caractéristique de quantité d'un flux de trafic et d'une caractéristique de distance avant-véhicule d'une voie actuelle.

7. Procédé selon la revendication 6, **caractérisé en ce que** :
la caractéristique de quantité du flux de trafic comprend une quantité du flux de trafic à un début de l'événement, une quantité du flux de trafic à une fin de l'événement et une caractéristique de distribution de quantités du flux de trafic dans une durée de l'événement.
la caractéristique de distance avant-véhicule de la voie actuelle comprend une distance avant-véhicule de la voie actuelle au début de l'événement, une distance avant-véhicule de la voie actuelle à la fin de l'événement et une caractéristique de distribution de distance avant-véhicule de la voie actuelle dans la durée de l'événement.

8. Équipement (4) d'évaluation d'événements de conduite de sécurité automobile, comprenant une mémoire (41), un processeur (40) et un programme informatique (42) stocké dans la mémoire (41) et exécutable par le processeur (40), **caractérisé en ce que** le processeur (40), lors de l'exécution du programme informatique (42), est configuré pour mettre en œuvre les étapes du procédé selon l'une quelconque des revendications 1 à 7.

9. Moyen de stockage lisible par ordinateur dans lequel un programme informatique (42) est stocké, **caractérisé en ce que** le programme informatique (42), lorsqu'il est exécuté par un processeur (40), provoque la mise en œuvre des étapes du procédé selon l'une quelconque des revendications 1 à 7.
